# EUROPÄISCHE PATENTSCHRIFT

(11) **EP 1 407 902 B1**
(45) Veröffentlichungstag und Bekanntmachung des Hinweises auf die Patenterteilung: **27.01.2010**
(21) Anmeldenummer: 03021289.8
(22) Anmeldetag: 19.09.2003
(51) Int. Cl.: B60G 7/00, B60G 3/20

(54) **Radaufhängung, insbesondere für Kraftfahrzeuge**
Wheel suspension, particularly for motor vehicles
Suspension de roue, notamment pour véhicules automobiles

(30) Priorität: 11.10.2002 DE 10247663
(43) Veröffentlichungstag der Anmeldung: 14.04.2004
(73) Patentinhaber: AUDI AG, 85045 Ingolstadt (DE)
(72) Erfinder: Krüger, Frieder, 96271 Grub (DE); Langhoff, Hans-Jürgen, 85101 Lenting (DE)
(74) Vertreter: Asch, Konrad

(56) Entgegenhaltungen:
- EP-A- 0 462 399
- WO-A-92/12868
- WO-A-92/16387
- FR-A- 2 806 693

## Beschreibung

Die Erfindung betrifft eine Radaufhängung, insbesondere für Kraftfahrzeuge, gemäß dem Oberbegriff des Patentanspruches 1.

Für die exakte Radführung und das Fahrverhalten und den Fahrkomfort eines Fahrzeuges, insbesondere von Kraftfahrzeugen, ist der Reifen ein wesentlicher Parameter der Radaufhängung. Insbesondere bei schnelffähreriden Kraftfahrzeugen werden vermehrt Niederquerschnitt-Reifen eingesetzt, die u.a. eine verbesserte Kurvenstabilität durch höhere Seitensteifigkeit aufweisen. Damit kann aber unter Berücksichtigung eines zufriedenstellenden Dämpfungsverhalten des Reifens nicht vermieden werden, dass sich der Reifen unter dem Seitenkrafteinfluss z.B. beim Durchfahren von Kurven verformt, wodurch sich eine verringerte, etwa trapezförmige Radaufstandsfläche einstellt und zudem der Reifen im Reifenlatsch eine ungleichmäßige Druckverteilung erfährt. Die erreichbaren Seitenkräfte bzw. Kurvengeschwindigkeiten des Fahrzeuges liegen unterhalb der physikalisch möglichen Leistungsgrenze des Reifens.

Aus der FR-A-2 806 693 ist eine gattungsgemäße Radaufhängung für Kraftfahrzeuge bekannt. Die Radaufhängung weist ein auf einem Achszapfen drehbar gelagertes Rad aus Felge und Reifen auf. Der Achszapfen ist mit einem Radträger verbunden, der wiederum mit Radführungselementen der Radaufhängung zusammenwirkt. Die Radnabe ist über Führungsmittel nachgiebig mit dem Radträger verbunden. Dabei liegt ein Momentanpol der den Radsturz bei Seitenkrafteinwirkungen verändernden Führungsmittel unterhalb der Radaufstandsfläche des Reifens. Die Führungsmittel sind zumindest zwei im Wesentlichen senkrecht verlaufende Koppeln mit etwa horizontal ausgerichteten Schwenkachsen. Diese sind mit einem Ende mit dem Radträger und mit dem anderen Ende mit der Radnabe verbunden.

Aus der WO 92/12868 A sowie der EP-A-0 462 399 ist ebenfalls jeweils eine Radaufhängung bekannt, bei der der Achszapfen des Fahrzeugrades beziehungsweise dessen zugeordneter Nabenbereich beabstandet von als Koppeln ausgebildeten Führungsmittel angeordnet ist, ohne sich durch entsprechende Ausnehmungen dieser Koppeln zu erstreckt.

Aufgabe der Erfindung ist es, eine Radaufhängung der gattungsgemäßen Art vorzuschlagen, mit der die Reifenverformung bei auftretenden Seitenkräften verringerbar und damit ohne negative Beeinflussung des Fahrkomforts eine höhere Kurvenstabilität des Fahrzeuges erzielbar ist.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird vorgeschlagen, dass die Radnabe der Radaufhängung über Führungsmittel nachgiebig mit dem Radträger verbunden ist, wobei der Momentanpol der den Radsturz bei Seitenkrafteinwirkung verändernden Führungsmittel unterhalb der Radaufstandsfläche des Reifens auf der Fahrbahn liegt. Daraus resultiert, dass sich das Rad abhängig von der auftretenden Seitenkraft z.B. beim Durchfahren von Kurven über die Führungsmittel durch entsprechende Radsturzänderung in die Kurve hinein neigen kann und dadurch der Verformung des Reifenlatsches entgegen wirkt. Die Reifenaufstandsfläche ist unverändert etwa rechteckförmig und es liegt eine gleichmäßigere Druckverteilung im Reifenlatsch vor, die die Aufnahme bzw. Übertragung höherer Seitenkräfte in Kurven ermöglicht.

Erfindungsgemäß sind die Führungsmittel zumindest zwei im wesentlichen senkrecht verlaufende Koppeln mit etwa horizontal ausgerichteten Schwenkachsen, die einenends mit dem Radträger und anderenends mit der Radnabe schwenkbar verbunden sind und deren gedachte Verlängerungen den Momentanpol definieren. Die Verwendung entsprechender Koppeln ergibt größere Freiheitsgrade bei der Auslegung der Führungsmittel und deren Anordnung an der Radaufhängung. Des weiteren ist eine exaktere Radsturzbeeinflussung über die auftretenden Seitenkräfte möglich.

In vorteilhafter Weiterbildung der Erfindung wird vorgeschlagen, die Position, die Längen und den Winkel der Koppeln bzw. den Momentanpol zur auftretenden Radlast so zu definieren, dass sich abhängig von der momentanen Seitenkraft eine definierte Radsturzstellung einstellt. Dies heißt, dass sich das vorgeschlagene System selbststabilisierend verhält und sich jeweils abhängig von der Radlast als dem einen Parameter und der Seitenkraft als dem weiteren Parameter so einstellt, dass der Radsturz einer optimalen Seitenkraftübertragung entspricht.

Die Koppeln können baulich besonders vorteilhaft über jeweils zwei die horizontalen Schwenkachsen bildende Lagerstellen mit dem Radträger und der Radnabe verbunden sein. Erfindungsgemäß sind die Koppeln über zentrale Ausnehmungen um die Radnabe herum angeordnet. Dies ermöglicht eine an gegebene Einbauverhältnisse günstig anpassbare und besonders kompakte Konstruktion, bei der die Führungsmittel unmittelbar um die Radnabe herum positionierbar sind.

Ferner wird vorgeschlagen, bei einem Kraftfahrzeug mit Scheibenbremsen das Bremszuspannorgan an der Radnabe und nicht wie üblich an dem Radträger zu befestigen, so dass das Bremszuspannorgan mit der Radnabe und der an dem Rad bzw. dessen Achse oder Welle angeordneten Bremsscheibe eine über die Führungsmittel nachgiebige Funktionseinheit bilden kann.

Des weiteren können im Kraftfluss zwischen der Radnabe und dem Radträger federnde Mittel vorgesehen sein, die in gezielter Weise die Radsturzänderungen in vorteilhafter Weise mit beeinflussen können.

Insbesondere können die federnden Mittel jedoch die Radnabe in eine konstruktiv vorgegebene Position vorspannen, die beispielsweise einer Grundstellung (Neutralstellung) des Rades bei Geradeausfahrt des Kraftfahrzeuges, also ohne Seitenkrafteinfluss, entspricht.

Dabei können die federnden Mittel bevorzugt gummielastische Puffer sein, die zudem eine definierte Dämpfungswirkung auf die Führungsmittel und die Radnabe ausüben können.

Dies schließt aber nicht aus, dass nicht ggf. zusätzliche Dämpfungsmittel wie z.B. ein hydraulischer Stoßdämpfer vorteilhaft einsetzbar sind, um im Fahrbetrieb ggf. auftretenden hochfrequenten Schwingungen entgegen zu wirken. Die dämpfenden Mittel können dabei bevorzugt unmittelbar auf die Koppeln bzw. Führungsmittel wirken.

Ein Ausführungsbeispiel der Erfindung ist im Folgenden mit weiteren Einzelheiten näher beschrieben.

Die anliegende schematische Zeichnung zeigt in:
- **Fig. 1**: in raumbildlicher Darstellung eine Radaufhängung für ein Kraftfahrzeug mit Führungsmitteln zum Seitenkraft abhängigen Verändern des Radsturzes mittels zwischen der Radnabe und dem Radträger angeordneten Koppeln;
- **Fig. 2**: in schematischer Darstellung die Radsturzänderung der Radaufhängung gemäß Fig. 1 bei einer Seitenkraft von links;
- **Fig. 3**: den Radsturz der Radaufhängung gemäß Fig. 1 ohne Seitenkraft in einer Neutralstellung; und
- **Fig. 4**: die Radsturzänderung der Radaufhängung gemäß Fig. 1 bei einer entgegengerichteten Seitenkraft von rechts.

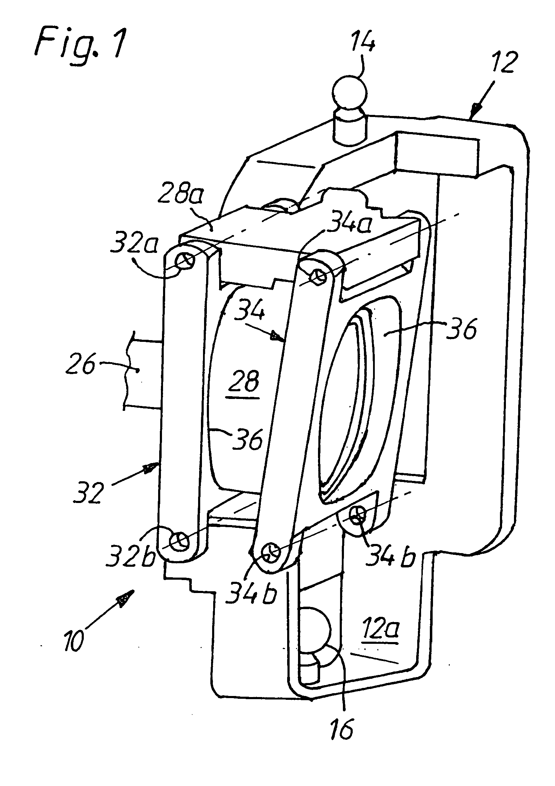

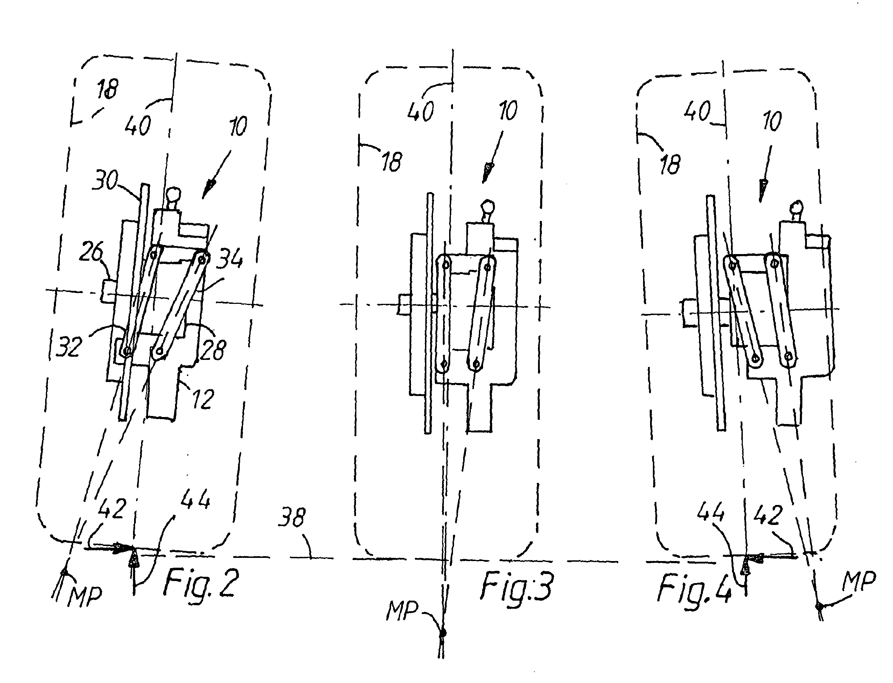

In der **Fig. 1** ist schematisch eine unabhängige Radaufhängung 10 für ein Kraftfahrzeug teilweise dargestellt. Dabei ist der rahmenförmige, Radträger 12 über angedeutete Kugelgelenke 14, 16 mit Radführungselementen wie Querlenkern etc. (nicht dargestellt) verbunden. Die dargestellte Radaufhängung 10 ist für ein gelenktes Rad 18 (vgl. **Fig. 2 bis 4**) ausgelegt, wobei das Rad 18 sich in bekannter Weise aus einer Felge und einem luftgefüllten Reifen zusammen setzt. Die Radaufhängung 10 kann aber auch für ein ungelenktes Hinterrad eines Kraftfahrzeuges ausgeführt sein.

Das Rad 18 ist mittels einer einen entsprechenden Anschlussflansch aufweisenden Welle 26 über nicht dargestellte Radlager in einer Radnabe 28 drehbar gelagert, wobei zwischen der Felge und dem Anschlussflansch in bekannter Weise eine Bremsscheibe 30 einer nicht dargestellten Scheibenbremse des Kraftfahrzeuges mit einem hydraulisch betätigten Bremszuspannorgan (nicht ersichtlich) angeordnet ist. Das Bremszuspannorgan ist an der Radnabe 28 befestigt.

Die Radnabe 28 ist mit dem Radträger 12 über zwei rahmenförmige Koppeln 32, 34 gelenkig verbunden, die mit jeweils einer zentralen Ausnehmung 36 um die Radnabe 28 herum und im wesentlichen senkrecht angeordnet sind.

Dabei ist eine jede Koppel 32, 34 um etwa horizontal ausgerichtete Schwenkachsen bzw. jeweils über zwei Lagerstellen 32b, 34b an dem Radträger 12 und über ebenfalls zwei Lagerstellen 32a, 34a an der Radnabe 28 angelenkt, wobei dazu an die Radnabe 28 und an den Radträger entsprechende Lagerkonsolen 28a bzw. 12a angeformt sind. Die Lagerstellen 32a, 34a bzw. 32b, 34b können in bei Radaufhängungen üblicher Weise durch sogenannte Gummi-Metall-Hülsenlager bzw. silent blocs bzw. Gleit- oder Rollenlager gebildet sein.

Die Radnabe 28 ist somit ähnlich einer Parallelführung relativ zum Radträger 12 beweglich, wobei aufgrund der ersichtlichen Position, der Längen und der vorgegebenen Winkel der Koppeln 32, 34 und zum Radsturz 40 (vgl. **Fig. 2 bis 4**) ein Momentanpol MP eingestellt ist, der unterhalb der Radaufstandsfläche (Linie 38) des Reifens des Rades 18 auf der Fahrbahn des Kraftfahrzeuges liegt. Der Momentanpol MP ergibt sich aus der gedachten Verlängerung der Lagerstellen 32a, 32b bzw. 34a, 34b der Koppeln 32, 34 und liegt in der senkrechten Radmitte des Rades 18.

Die Auslegung und Anordnung der besagten Koppeln 32, 34 ist zudem so, dass ein selbststabilisierendes System erreicht ist, bei dem sich jeweils abhängig von der Größe der Seitenkraft (Pfeil 42) und der Radaufstandskraft (Pfeil 44) ein definierter Radsturz 40 einstellt, der der Verformung des Reifens des Rades 18 im Reifenlatsch entgegenwirkt.

Dies zeigen die **Fig. 2 bis 4** anhand der mit dem Pfeil 42 eingezeichneten Seitenkräfte. Durch den unterhalb des Angriffspunktes (Radaufstandslinie 38) und in der senkrechten Radmitte liegenden Momentanpol MP wird der Radsturz 40 mittels der schwenkbaren Koppeln 32, 34 so verändert, dass er der Verformung-des Reifenlatsches entgegenwirkt. Faktisch ändert sich der Radsturz 40 ausgehend von einer angenommenen Neutralstellung (**Fig. 3**) bei einer Seitenkraft von links (**Fig. 2**) in einen positiven Radsturz 40 und bei einer Seitenkraft von rechts in einen negativen Radsturz 40 (**Fig. 4**). Der Zeichnung **Fig. 2 bis 4** liegt dabei die Annahme zugrunde, dass das Rad 18 im Fall der **Fig. 2** kurvenaußen und im Fall der **Fig. 4** kurveninnen des Kraftfahrzeuges positioniert ist.

Die in der **Fig. 3** dargestellte Neutralstellung des Rades 18 kann in nicht dargestellter Weise durch federnde Mittel vorgegeben sein, beispielsweise durch in den Schwenkbereich der Koppeln 32, 34 eingeschaltete Gummipuffer, die eine definierte Vorspannung auf die Koppeln 32, 34 ausüben. Ferner können hydraulische Dämpfungsmittel, z.B. ein Teleskop-Stoßdämpfer, vorgesehen sein, die die Ausbildung ggf. auftretender Schwingungen an den Koppeln 32, 34 bzw. an der Radnabe 28 unterdrücken.

## Patentansprüche

1. Radaufhängung, insbesondere für Kraftfahrzeuge, mit einem in einer Radnabe drehbar gelagertem Rad aus Felge und luftgefülltem Reifen, wobei die Radnabe mit einem Radträger verbunden ist, der wiederum mit Radführungselementen der Radaufhängung zusammenwirkt, wobei die Radnabe (28) über Führungsmittel (32, 34) nachgiebig mit dem Radträger (12) verbunden ist, und der Momentanpol MP der den Radsturz (40) bei Seitenkrafteinwirkung verändernden Führungsmittel (32, 34) unterhalb der Radaufstandsfläche (38) des Reifens auf der Fahrbahn-liegt, welche Führungsmittel zumindest zwei im wesentlichen senkrecht verlaufende Koppeln (32, 34) mit etwa horizontal ausgerichteten Schwenkachsen sind, die einenends mit dem Radträger (12) und anderenends mit der Radnabe (24) schwenkbar verbunden sind und deren gedachte Verlängerungen den Momentanpol MP definieren, **dadurch gekennzeichnet, dass** die Koppeln (32, 34) über zentrale Ausnehmungen (36) um die Radnabe (28) herum angeordnet sind.

2. Radaufhängung nach Anspruch 1, **dadurch gekennzeichnet, dass** die Position, die Längen und der Winkel der Koppeln (32, 34) bzw. der Momentanpol MP zur auftretenden Radlast so definiert sind, dass sich abhängig von der momentanen Seitenkraft eine definierte Radsturzstellung einstellt.

3. Radaufhängung nach den Ansprüchen 1 oder 2, **dadurch gekennzeichnet, dass** die Koppeln (32, 34) über jeweils zwei die horizontalen Schwenkachsen bildende Lagerstellen (32a, 34a, 32b, 34b) mit dem Radträger (12) und der Radnabe (28) verbunden sind.

4. Radaufhängung nach einem der Ansprüche 1 bis 3, **dadurch gekennzeichnet, dass** bei einem Kraftfahrzeug mit Scheibenbremsen das Bremszuspannorgan an der Radnabe (28) befestigt ist.

5. Radaufhängung nach einem der Ansprüche 1 bis 4, **dadurch gekennzeichnet, dass** im Kraftfluss zwischen der Radnabe (28) und dem Radträger (12) federnde Mittel vorgesehen sind.

6. Radaufhängung nach Anspruch 5, **dadurch gekennzeichnet, dass** die federnden Mittel die Radnabe (28) in eine konstruktiv vorgegebene Position vorspannen.

7. Radaufhängung nach Anspruch 5 oder 6, **dadurch gekennzeichnet, dass** die federnden Mittel gummielastische Puffer sind.

8. Radaufhängung nach den vorhergehenden Ansprüchen, **dadurch gekennzeichnet, dass** zusätzlich zu den Führungsmitteln (32, 34) die Radnabenbewegung dämpfende Mittel vorgesehen sind.

## Claims

1. Wheel suspension, particularly for motor vehicles, with a wheel rotatably mounted in a wheel hub and comprising a rim and an inflated tyre, wherein the wheel hub is connected to a wheel carrier, which in turn interacts with wheel guiding elements of the wheel suspension, wherein the wheel hub (28) is compliantly connected to the wheel carrier (12) by way of guiding means (32, 34), and the instantaneous centre MP of the guiding means (32, 34) that changes the wheel camber (40) under the effect of lateral force lies below the contact area (38) of the tyre on the roadway, which guiding means comprises at least two substantially vertically extending couplers (32, 34) with approximately horizontally oriented pivot spindles, which are pivotably connected on the one hand to the wheel carrier (12) and on the other hand to the wheel hub (24) and the imaginary extensions of which define the instantaneous centre MP, **characterized in that** the couplers (32, 34) are arranged over central clearances (36) around the wheel hub (28).

2. Wheel suspension according to Claim 1, **characterized in that** the position, the lengths and the angle of the couplers (32, 34) and the instantaneous centre MP of the wheel load occurring are defined such that a defined wheel camber position is obtained in dependence on the instantaneous lateral force.

3. Wheel suspension according to Claim 1 or 2, **characterized in that** the couplers (32, 34) are connected to the wheel carrier (12) and the wheel hub (28) by way of two respective bearing locations (32a, 34a, 32b, 34b) forming the horizontal pivot spindles.

4. Wheel suspension according to one of Claims 1 to 3, **characterized in that** on a motor vehicle with disc brakes the brake applying element is fastened to the wheel hub (28).

5. Wheel suspension according to one of Claims 1 to 4, **characterized in that** resilient means are provided in the flux of force between the wheel hub (28) and the wheel carrier (12).

6. Wheel suspension according to Claim 5, **characterized in that** the resilient means pretension the wheel hub (28) into a position predefined in the structural design.

7. Wheel suspension according to Claim 5 or 6, **characterized in that** the resilient means are rubber-elastic buffers.

8. Wheel suspension according to the preceding claims, **characterized in that**, in addition to the guiding means (32, 34), means damping the wheel hub movement are provided.

## Revendications

1. Suspension de roue, notamment pour véhicules automobiles, comprenant une roue montée à rotation dans un moyeu de roue, constituée d'une jante et d'un pneu rempli d'air, le moyeu de roue étant connecté à un support de roue, qui à son tour coopère avec des éléments de guidage de roue de la suspension de roue, le moyeu de roue (28) étant connecté de manière flexible au support de roue (12) par le biais de moyens de guidage (32, 34), et le centre de rotation instantané MP des moyens de guidage (32, 34) modifiant le carrossage (40) lors de l'application de forces latérales se situant en dessous de la surface d'appui de la roue (38) du pneu sur la chaussée, lesdits moyens de guidage étant au moins deux bielles (32, 34) s'étendant essentiellement verticalement, avec des axes de pivotement orientés approximativement horizontalement, qui sont connectés de manière pivotante à une extrémité au support de roue (12) et à l'autre extrémité au moyeu de roue (24) et dont les prolongations imaginaires définissent le centre de rotation instantané MP, **caractérisée en ce que** les bielles (32, 34) sont disposées par le biais d'évidements centraux (36) autour du moyeu de roue (28).

2. Suspension de roue selon la revendication 1, **caractérisée en ce que** la position, les longueurs et l'angle des bielles (32, 34) ou le centre de rotation instantané MP par rapport à la charge appliquée aux roues sont définis de telle sorte qu'une position de carrossage définie s'établisse en fonction de la force latérale instantanée.

3. Suspension de roue selon les revendications 1 ou 2, **caractérisée en ce que** les bielles (32, 34) sont connectées au support de roue (12) et au moyeu de roue (28) par le biais de deux points de palier respectifs (32a, 34a, 32b, 34b) formant les axes de pivotement horizontaux.

4. Suspension de roue selon l'une quelconque des revendications 1 à 3, **caractérisée en ce que** dans le cas d'un véhicule automobile avec des freins à disque, l'organe de serrage des freins est fixé sur le moyeu de roue (28).

5. Suspension de roue selon l'une quelconque des revendications 1 à 4, **caractérisée en ce que** dans le flux de forces entre le moyeu de roue (28) et le support de roue (12) sont prévus des moyens élastiques.

6. Suspension de roue selon la revendication 5, **caractérisée en ce que** les moyens élastiques précontraignent le moyeu de roue (28) dans une position prédéfinie par la construction.

7. Suspension de roue selon la revendication 5 ou 6, **caractérisée en ce que** les moyens élastiques sont des tampons ayant l'élasticité du caoutchouc.

8. Suspension de roue selon les revendications précédentes, **caractérisée en ce que** des moyens amortissant le mouvement du moyeu de roue sont prévus en plus des moyens de guidage (32, 34).
